# EUROPEAN PATENT SPECIFICATION

(11) **EP 0 519 898 B1**
(45) Date of publication and mention of the grant of the patent: **11.03.1998**
(21) Application number: 92870090.5
(22) Date of filing: 17.06.1992
(51) Int. Cl.: C08K 5/00, C08J 3/22, C08L 23/02

(54) **Method for colouring thermoplastic synthetic materials with indoline pigments, colour concentrate to be used therein and method for preparing this colour concentrate**
Verfahren zur Färbung thermoplastischer Kunststoffe mit Indolinpigment-Farbkonzentraten, das darin verwendete Farbkonzentrat und Verfahren zur Herstellung dieser Farbkonzentrate
Procédé de coloration de matière synthétique thermoplastique, concentré coloré utilisable dans ce procédé, et procédé pour la préparation de ce concentré coloré

(30) Priority: 20.06.1991 BE 9100601
(43) Date of publication of application: 23.12.1992
(73) Proprietor: A. SCHULMAN PLASTICS, B-2880 Bornem (BE)
(72) Inventor: Janssens, Marcel, B-9200 Dendermonde (BE)
(74) Representative: Pieraerts, Jacques

(56) References cited:
- FR-A- 2 162 593
- US-A- 3 444 115

## Description

This invention relates to a method for colouring thermoplastic synthetic materials on the basis of polyolefin homo- and copolymers, such as LDPE, HDPE, LLDPE, PP and EVA, by means of an organic pigment.

In a method which is known from the practice for colouring the hereabove indicated thermoplastic synthetic materials, use is made of diarylide pigments which are described in the "Colour Index Manual" as "Pigment Yellow 12, 13, 14, 15, 16, 17 and 83" and as "Pigment Orange 34". However, it has been found that these pigments, when heated for example above 240°C during their processing, may release 3,3'-dichlorobenzidin, which is a carcinogen. Therefore, research had to be done for alternative pigments, the use of which is not detrimental for the health and which are moreover suited for colouring the hereabove mentioned synthetic materials on the basis of polyolefin homo- and copolymers and which do for example not discolour when used in these synthetic materials. This research amongst the existing in these synthetic materials stable pigments revealed a number of alternative pigments, such as for example "Pigment Yellow 93" which approaches very closely the colour of "Pigment Yellow 17", the pigment which has been used most commonly in the past. However, a drawback of these possible alternative pigments is their cost price which is much higher than the cost price of the diarylide pigments.

An object of the invention is now to provide a method for colouring thermoplastic synthetic materials on the basis of polyolefin homo- or copolymers which allows to use a cheaper pigment as alternative for the diarylide pigments.

To this end, at least one pigment from the isoindolin class is blended as pigment with the synthetic material and an acidic reacting additive, which is a stronger acid than the pigment and which is compatible with the synthetic material, is added to the latter in an amount which is sufficient to avoid discoloration of the isoindolin pigment.

Normally, the relatively cheap isoindolin pigments are not stable in the hereabove mentioned synthetic materials and after a while they will therefore discolour for example from bright lemon yellow to orange or from golden yellow to brown. However, it has been found according to the invention that by adding a sufficient amount of said acidic reacting additive, these isoindolin pigments are stabilized in these synthetic materials and provide surprisingly in this way, in combination with the acidic reacting additive, a good and relatively cheap alternative for the diarylide pigments.

In a particular embodiment of the method according to the invention, an organic acid compatible with the synthetic material is added as acidic reacting additive to the synthetic material.

In a first preferred embodiment, use is made to this end as organic acid of a fatty acid, preferably a C12 to C22 fatty acid such as stearic acid, isostearic acid and lauric acid. In a second preferred embodiment, a water soluble di- or tricarboxylic acid, such as citric acid and malic acid, is added as organic acid to the synthetic material.

In order to simplify the addition of the pigment to the synthetic material, use is made in a further preferred embodiment of a colour concentrate containing a restricted amount of one of said synthetic materials, said pigment and said acidic reacting additive, which colour concentrate is molten together with the synthetic material to be coloured.

The invention relates also to a colour concentrate for use in a method for colouring thermoplastic synthetic materials according to the invention, characterized in that the colour concentrate contains an amount of one of said synthetic materials, at least one pigment from the isoindolin class and an acidic reacting additive which is a stronger acid than the pigment and which is compatible with the synthetic material, said acidic reactive additive being present in an amount sufficient to avoid discoloration of the isoindolin pigment in the coloured synthetic material.

Such a colour concentrate offers the advantage that it can be easily molten together with the synthetic material in order to colour this material and that the relatively cheap isoindolin pigment will not discolour in this synthetic material due to the presence of the acidic reacting additive.

In a preferred embodiment of the colour concentrate according to the invention, this concentrate contains 0.1 to 5 % by weight of an organic acid and preferably about 1.5 % malic acid.

The invention further relates also to a method for preparing a colour concentrate according to the invention, characterized in that said synthetic material, the pigment and said acidic reacting additive are molten together.

Further particularities and advantages of the invention will become apparent from the following description of a method for colouring thermoplastic synthetic materials according to the invention, a colour concentrate to be used therein and of a method for preparing this colour concentrate. This description is only given by way of example and does not limit the scope of the invention.

According to the invention it has been found that for colouring synthetic materials on the basis of polyolefin homo- or copolymers such as LDPE, HDPE, LLDPE, PP and EVA, the relatively cheap isoindolin pigments can be a good alternative for the diarylide pigments and this notwithstanding the fact that these isoindolin pigments are not stable in the hereabove mentioned synthetic materials and discolour therefore therein as it is generally known.

In the method according to the invention, such a discoloration is avoided by adding an acidic reacting additive, which is a stronger acid than the isoindolin pigment, to the synthetic material so that substances which react alkaline with respect to the pigment and which are possibly present in the synthetic material are converted into their acidic form. Such alkaline reacting substances are for example added to the synthetic material in order to improve the processability. Examples of such substances are :
Antistatic agents : in order to make polyolefins antistatic, 1000 to 1500 ppm of N,N-bis-(2-hydroxyethyl)-stearylamine or lauryl diethanolamide are usually added.
Lubricants : in order to improve the processability of films, 500 to 2000 ppm of oleamide, erucamide, ethylenebisstearamide, etc. are usually added hereto.
Catalyst neutralisers : for the polymerisation of polyolefins, use is usually made of catalysts. These catalysts leave always remainders which may disintegrate the synthetic material during its processing in such a manner that the final product doesn't have the desired properties. In order to neutralize these catalyst remainders, 200 to 1000 ppm of metal stearates such as calcium, zinc and/or magnesium stearate are added.

As isoindolin pigments, use can be made of the pigments "Pigment Yellow 139" and "Pigment Yellow 185", as indicated in the "Colour Index Manual". These pigments are not alkaline stable, i.e. they discolour when they come into contact with or when they are blended with alkaline reacting substances. Pigment Yellow 185 discolours for example from lemon yellow to orange while Pigment Yellow 139 discolours from golden yellow to brown. This reaction is further catalized by increased temperatures. The bright lemon yellow "Yellow Pigment 185" discolours for example at 200°C to light orange and at 240°C even to brown. It will be clear that such discolorations are not allowable and that consequently, the isoindolin pigments have not been used so far for colouring polyolefins.

In a preferred embodiment of the invention, an organic acid is added as acidic reacting additive to the synthetic material. Suitable organic acids according to the invention are fatty acids, preferably C12 to C22 fatty acids, such as stearic acid, isostearic acid or lauric acid and also water soluble di- or tricarboxylic acids such as citric acid and malic acid.

The acidic reacting additive has to be added in an amount which is sufficient to convert the alkaline reacting substances in the synthetic material into their acidic form in such a manner that these substances are prevented from reacting with the isoindolin pigment. This amount depends on the first place of the amount of alkaline reacting substances which are present in the synthetic material and of the alkalinity number of these substances. This number is expressed in milliliter 0.1 N HCl required to neutralize 1 gram of the alkaline reacting substance. The alkalinity number comprises for example for ethoxylated fatty acid amine 16, for ethoxylated fatty acid amide 9, for fatty acid amide (oleamide, erucamide) 6 and for metal stearate 5. When use is made of fatty acids, this amount of acidic reacting additive which has to be added is further dependent on the acid number of these fatty acids and, when use is made of di- or tricarboxylic acids, on the acidity degree of these acids. The acid number of a fatty acid is expressed in milliliter KOH required to neutralize one gram of the fatty acid while the acidity degree of di- and tricarboxylic acids can be expressed by the pH of a 1 % aquous solution. The acid number of the used fatty acids is preferably situated between 150 and 300 as in the event of lower acid numbers, too much fatty acid has to be added whereby processing problems such as smoke formation and slipping may occur in the machine.

In the method according to the invention, an amount of acidic reacting additive is added to the synthetic material which is at least equivalent to the amount of alkaline reacting substances present therein and preferably an amount which is substantially equal to two times the equivalent amount.

Due to the fact that pigments are difficult to handle and moreover because they are in the form of a very fine powder, they are preferably added to the synthetic material in the form of a colour concentrate which is molten together in that event with the synthetic material. The colour concentrate according to the invention contains a restricted amount of thermoplastic synthetic material, the isoindolin pigment and the acidic reacting additive.

It is not necessarily required that the synthetic material of this colour concentrate is completely identical to the synthetic material to be coloured, although this is to be preferred.

The colour concentrate is usually added in an amount of 1 to 5 parts per 100 parts of the synthetic material. In view of this dilution, the concentration of the pigment and acidic reacting substance in the colour concentrate has therefore to be 20 to 100 times higher than in the finally coloured synthetic material, unless a portion of the acidic reacting additive is added for example separately to the synthetic material to be coloured.

Suitably, the colour concentrate according to the invention contains 0.1 to 5 % by weight of an organic acid. For malic acid, a concentration of 1.5 % by weight appeared in particular to be very suitable. Preferably, the colour concentrate contains a sufficient excess of acidic reacting additive in such a manner that this colour concentrate is suited for colouring synthetic materials wherein the content of alkaline reacting substances may vary within predetermined limits. The colour concentrate contains further an amount of organic pigment, usually situated between 10 and 50 % by weight, which, depending on the dilution, is sufficient to provide the synthetic material with the desired final colour.

In order to prepare the colour concentrate or the so-called "Masterbatches" according to the invention, the acidic reacting additive and the pigment are molten together with the restricted amount of synthetic material in such a manner that an intimate mixing is obtained. The acidic reacting additive may possibly already be added to the pigment during the production of the latter. The colour concentrates are for example produced in an internal so-called "Banburry mixer" or in a twin screw extruder wherein the polymer and the pigment are molten together and wherein the pigment is dispersed under high shear. Then the obtained product ("batch") is milled and/or extruded and granulated into pellets. The acidic reacting additive for stabilizing the pigment is also added into the mixer or into the extruder.

The following comparative examples demonstrate clearly that the method according to the invention enables to use isoindolin pigments for colouring polyolefins as an alternative for the diarylide pigments.

### Example 1

100 parts of HDPE of bottle blowing grade containing 0.1 part by weight of calcium stearate, were molten together with 0.5 parts by weight of Pigment Yellow 185; 0.01 part by weight of stearic acid and with 0.05 parts by weight of citric acid. It was found that the synthetic material coloured in this way keeps its bright lemon yellow colour. However, when no acidic reacting additive, i.e. no stearic acid or citric acid were added, a brown discoloration of the synthetic material was observed.

### Example 2

100 parts of polypropylene of film grade containing 0.15 parts by weight of N,N-bis-2 (hydroxyethyl)-stearylamine, were molten together with 0.5 parts by weight of Pigment Yellow 139; 0.02 parts by weight of stearic acid and with 0.05 parts by weight of malic acid. It was found that the synthetic material coloured in this way keeps its golden yellow colour. However, when no stearic acid or malic acid was added, a brown discoloration of the synthetic material was observed.

### Examples 3 to 9

In each of these examples, 100 parts by weight of a thermoplastic synthetic material were molten together with 5 parts by weight of a colour concentrate or a so-called "masterbatch" containing 20 % by weight pigment. Then, the final colour of the coloured synthetic material was determined. The obtained results are represented in table 1.

**Table 1 :**

| Composition and final colour of examples 3 to 9 of synthetic materials which were coloured either or not according to the invention. | | | | | | | |
|---|---|---|---|---|---|---|---|
| | 3 | 4 | 5 | 6 | 7 | 8 | 9 |
| HDPE 1 | 100 | 100 | 100 | - | - | - | - |
| HDPE 2 | - | - | - | 100 | 100 | - | - |
| PP 1 | - | - | - | - | - | 100 | 100 |
| Colour conc. 1 | 5 | - | - | - | - | - | - |
| Colour conc. 2 | - | 5 | - | 5 | - | - | - |
| Colour conc. 3 | - | - | 5 | - | 5 | - | - |
| Colour conc. 4 | - | - | - | - | - | 5 | - |
| Colour conc. 5 | - | - | - | - | - | - | 5 |
| Kind of yellow colour | LY | OY | LY | OY | LY | B | GY |

The abbreviations used in this table mean :
LY : lemon yellow
OY : orange yellow
B : brown
GY : golden yellow
HDPE : "High density polyethylene" containing 1000 ppm of zinc stearate as catalyst neutralizer.
HDPE 2 : "High density polyethylene" containing 2000 ppm of lauryl diethanolamide as antistatic agent.
PP1 : polypropylene containing 1500 ppm of EO-fatty acid amine as antistatic agent.
Colour conc. 1 : polyethylene colour concentrate containing 20 % by weight of Pigment Yellow 17.
Colour conc. 2 : polyethylene colour concentrate containing 20 % by weight of Pigment Yellow 185.
Colour conc. 3 : polyethylene colour concentrate containing 20 % by weight of Pigment Yellow 185 and 1.5 % by weight of malic acid.
Colour conc. 4 : polypropylene colour concentrate containing 20 % by weight of Pigment Yellow 139.
Colour conc. 5 : polypropylene colour concentrate containing 20 % by weight of Pigment Yellow 139 and 1.5 % by weight of malic acid.

From the examples 3 to 9, only examples 5, 7 and 9 are according to the invention. These examples demonstrate that the diarylide pigment Pigment Yellow 17 can be replaced by an isoindolin pigment on the condition that a sufficient amount of an acidic reacting additive is also added.

It is clear that the invention is in no way limited to the hereabove described embodiments but that they can be modified in many ways without leaving the scope of the present patent application.

The isoindolin pigments could for example possibly be used in combination with other organic pigments and especially also in combination with anorganic pigments such as titanium dioxyde. In combination with titanium dioxyde, these organic pigments give brilliant and opaque colours.

## Claims

1. A method for colouring thermoplastic synthetic materials on the basis of polyolefin homo- or copolymers, such as LDPE, HDPE, LLDPE, PP and EVA, by means of an organic pigment, characterized in that at least one pigment from the isoindolin class is blended as pigment with the synthetic material and an acidic reacting additive, which is a stronger acid than the pigment and which is compatible with the synthetic material, is added to the latter in an amount which is sufficient to avoid discoloration of the isoindolin pigment.

2. A method according to claim 1, characterized in that an organic acid is added as acidic reacting additive to the synthetic material.

3. A method according to claim 2, characterized in that a fatty acid, preferably a C12 to C22 fatty acid, such as stearic acid, isostearic acid and lauric acid, is added as organic acid to the synthetic material.

4. A method according to claim 2, characterized in that a water soluble di- or tricarboxylic acid, such as citric acid and malic acid, is added as organic acid to the synthetic material.

5. A method according to any one of the claims 1 to 4, characterized in that the synthetic material is molten together with a colour concentrate containing a restricted amount of one of said synthetic materials, said pigment and said acidic reacting additive.

6. A method according to any one of the claims 1 to 5, characterized in that the isoindolin pigment "Pigment Yellow 139" and/or the isoindolin pigment "Pigment Yellow 185" are added to the synthetic material.

7. A colour concentrate for use in a method for colouring thermoplastic synthetic materials according to claim 5 or 6, characterized in that the colour concentrate contains an amount of one of said synthetic materials, at least one pigment from the isoindolin class and an acidic reacting additive which is a stronger acid than the pigment and which is compatible with the synthetic material, said acidic reacting additive being present in an amount sufficient to avoid discoloration of the isoindolin pigment in the coloured synthetic material.

8. A colour concentrate according to claim 7, characterized in that it contains 0.1 to 5 % by weight of an organic acid and preferably about 1.5 % by weight malic acid.

9. A colour concentrate according to claim 7 or 8, characterized in that said isoindolin pigment is "Pigment Yellow 139" and/or "Pigment Yellow 185".

10. A colour concentrate according to any one of the claims 7 to 9, characterized in that it contains about 10 to 50 % by weight pigment.

11. A method for preparing a colour concentrate according to any one of the claims 7 to 10, characterized in that said synthetic material, the pigment and said acidic reacting additive are molten together.

12. A method according to claim 11, characterized in that the pigment and the acidic reacting additive are blended previously.

## Patentansprüche

1. Ein Verfahren zur Färbung thermoplastischer synthetischer Materialien auf der Basis von Polyolefin-Homo- oder -Copolymeren, wie etwa LDPE, HDPE, LLDPE, PP und EVA, mittels eines organischen Pigmentes, dadurch gekennzeichnet, daß wenigstens ein Pigment aus der Isoindolin-Klasse als Pigment mit dem synthetischen Material vermischt wird und ein sauer reagierender Zusatzstoff, der eine stärkere Säure ist als das Pigment und der mit dem synthetischen Material kompatibel ist, zu letzterem in einer Menge zugesetzt wird, die ausreichend ist, um eine Farbänderung des Isoindolinpigmentes zu verhindern.

2. Ein Verfahren nach Anspruch 1, dadurch gekennzeichnet, daß als sauer reagierender Zusatzstoff eine organische Säure zum synthetischen Material zugesetzt wird.

3. Ein Verfahren nach Anspruch 2, dadurch gekennzeichnet, daß als organische Säure eine Fettsäure, vorzugsweise eine C12- bis C22-Fettsäure, wie etwa Stearinsäure, Isostearinsäure und Laurinsäure, zum synthetischen Material zugesetzt wird.

4. Ein Verfahren nach Anspruch 2, dadurch gekennzeichnet, daß als organische Säure eine wasserlösliche Di- oder Tricarbonsäure, wie etwa Zitronensäure und Äpfelsäure, zum synthetischen Material zugesetzt wird.

5. Ein Verfahren nach einem der Ansprüche 1 bis 4, dadurch gekennzeichnet, daß das synthetische Material zusammen mit einem Farbkonzentrat geschmolzen wird, das eine begrenzte Menge von einem von besagten synthetischen Materialien, besagtes Pigment und besagten sauer reagierenden Zusatzstoff enthält.

6. Ein Verfahren nach einem der Ansprüche 1 bis 5, dadurch gekennzeichnet, daß das Isoindolinpigment "Pigment Yellow 139" und/oder das Isoindolinpigment "Pigment Yellow 185" zum synthetischen Material zugesetzt werden.

7. Ein Farbkonzentrat zur Verwendung bei einem Verfahren zur Färbung thermoplastischer synthetischer Materialien nach Anspruch 5 oder 6, dadurch gekennzeichnet, daß das Farbkonzentrat eine Menge von einem von besagten synthetischen Materialien, wenigstens ein Pigment aus der Isoindolin-Klasse und einen sauer reagierenden Zusatzstoff enthält, der eine stärkere Säure als das Pigment ist und der mit dem synthetischen Material kompatibel ist, wobei besagter sauer reagierender Zusatzstoff in einer Menge vorliegt, die ausreichend ist, um eine Farbänderung des Isoindolinpigmentes im gefärbten synthetischen Material zu verhindern.

8. Ein Farbkonzentrat nach Anspruch 7, dadurch gekennzeichnet, daß es 0,1 bis 5 Gew.-% einer organischen Säure und vorzugsweise etwa 1,5 Gew.-% Äpfelsäure enthält.

9. Ein Farbkonzentrat nach Anspruch 7 oder 8, dadurch gekennzeichnet, daß besagtes Isoindolinpigment "Pigment Yellow 139" und/oder "Pigment Yellow 185" ist.

10. Ein Farbkonzentrat nach einem der Ansprüche 7 bis 9, dadurch gekennzeichnet, daß es etwa 10 bis 50 Gew.-% Pigment enthält.

11. Ein Verfahren zur Herstellung eines Farbkonzentrats nach einem der Ansprüche 7 bis 10, dadurch gekennzeichnet, daß besagtes synthetische Material, das Pigment und besagter sauer reagierender Zusatzstoff zusammen geschmolzen werden.

12. Ein Verfahren nach Anspruch 11, dadurch gekennzeichnet, daß das Pigment und der sauer reagierende Zusatzstoff zuvor vermischt werden.

## Revendications

1. Procédé de coloration de matières synthétiques thermoplastiques à base d'homo- ou de copolymères de polyoléfines, tels que LDPE, HDPE, LLDPE, PP et EVA, au moyen d'un pigment organique, caractérisé en ce qu'au moins un pigment de la classe de l'isoindoline est mélangé comme pigment avec la matière synthétique et un additif réactionnel acide, qui est un acide plus fort que le pigment et qui est compatible avec la matière synthétique, est ajouté à cette dernière en une quantité qui est suffisante pour éviter une décoloration du pigment d'isoindoline.

2. Procédé suivant la revendication 1, caractérisé en ce qu'un acide organique est ajouté comme additif réactionnel acide à la matière synthétique.

3. Procédé suivant la revendication 2, caractérisé en ce qu'un acide gras, avantageusement un acide gras en C12 à C22, tel que l'acide stéarique, l'acide isostéarique et l'acide laurique, est ajouté comme acide organique à la matière synthétique.

4. Procédé suivant la revendication 2, caractérisé en ce qu'un acide di- ou tricarboxylique soluble dans l'eau, tel que l'acide citrique et l'acide malique, est ajouté comme acide organique à la matière synthétique.

5. Procédé suivant l'une quelconque des revendications 1 à 4, caractérisé en ce que la matière synthétique est fondue en même temps qu'avec un concentré de couleur contenant une quantité restreinte d'une de ces matières synthétiques, le pigment et l'additif réactionnel acide précités.

6. Procédé suivant l'une quelconque des revendications 1 à 5, caractérisé en ce que le pigment d'isoindoline "Pigment Yellow 139" et/ou le pigment d'isoindoline "Pigment Yellow 185" sont ajoutés à la matière synthétique.

7. Concentré de couleur utilisable dans un procédé de coloration de matières synthétiques thermoplastiques suivant l'une ou l'autre des revendications 5 et 6, caractérisé en ce que le concentré de couleur contient une certaine quantité d'une desdites matières synthétiques, au moins un pigment de la classe de l'isoindoline et un additif réactionnel acide qui est un acide plus fort que le pigment et qui est compatible avec la matière synthétique, cet additif réactionnel acide étant présent en une quantité suffisante pour éviter une décoloration du pigment d'isoindoline dans la matière synthétique colorée.

8. Concentré de couleur suivant la revendication 7, caractérisé en ce qu'il contient 0,1 à 5 % en poids d'un acide organique et avantageusement environ 1,5 % en poids d'acide malique.

9. Concentré de couleur suivant l'une et l'autre des revendications 7 et 8, caractérisé en ce que le pigment d'isoindoline est le "Pigment Yellow 139" et/ou le "Pigment Yellow 185".

10. Concentré de couleur suivant l'une quelconque des revendications 7 à 9, caractérisé en ce qu'il contient environ 10 à 50 % en poids de pigment.

11. Procédé de préparation d'un concentré de couleur suivant l'une quelconque des revendications 7 à 10, caractérisé en ce que la matière synthétique, le pigment et l'additif réactionnel acide sont fondus ensemble.

12. Procédé suivant la revendication 11, caractérisé en ce que le pigment et l'additif réactionnel acide sont mélangés préalablement.
